# EUROPÄISCHE PATENTSCHRIFT

(11) **EP 0 767 336 B1**
(45) Veröffentlichungstag und Bekanntmachung des Hinweises auf die Patenterteilung: **25.07.2001**
(21) Anmeldenummer: 96106410.2
(22) Anmeldetag: 24.04.1996
(51) Int. Cl.: F16L 23/16, F16J 15/06

(54) **Zentriervorrichtung für die Dichtung einer Flanschverbindung**
Apparatus for centering the seal of a flanged coupling
Dispositif de centrage pour un joint d'étanchéité d'un raccord à brides

(30) Priorität: 25.04.1995 DE 29506929 U
(43) Veröffentlichungstag der Anmeldung: 09.04.1997
(73) Patentinhaber: Jung, Alfred, 50859 Köln (DE)
(72) Erfinder: Jung, Alfred, 50859 Köln (DE)
(74) Vertreter: Werner, Hans-Karsten, Dr.Dipl.-Chem.

(56) Entgegenhaltungen:
- CH-A- 528 040
- DE-U- 9 312 448
- DE-U- 9 405 913

## Beschreibung

Die Erfindung betrifft eine Zentriervorrichtung für die Dichtung einer Flanschverbindung nach dem Oberbegriff des Anspruchs 1.

Eine solche Zentriervorrichtung geht aus der DE 94 05 913 U1 hervor. Diese beschreibt in Figur 3 eine Zentriervorrichtung mit einer flachen Zentrierscheibe, die an dem äußeren Rand einer flachen Dichteinrichtung angeordnet ist. Die Dichteinrichtung besteht aus einem flachen Grundkörper, auf den beidseitig ringförmige Dichtungsauflagen aufgeklebt sind. Die Dichtungsaufnahmeflächen haben üblicherweise Ringzähne, so z.B. bei einer Kammprofildichtung. Bei der Vorrichtung nach der DE 94 05 913 U1 ist die Zentrierscheibe in 4 gleiche Sektoren unterteilt. Jeder Sektor hat eine spiralförmig nach außen verlaufende Flanke. Die Flanken dienen als Anlageflächen für die vier Flanschschrauben zur Zentrierung der Dichtungseinrichtung. Durch Drehen der Scheibe in Zentrierrichtung kommt die Scheibe mit ihren Flankenflächen an den Flanschschrauben zur Anlage, wodurch die Dichtung zentriert ist.

Eine solche Zentriervorrichtung geht aus der CH-A-528 040 auch hervor.

In der Praxis ist.oftmals der Abstand der Flansche sehr gering, so daß ein guter Zugang zu der Zentrierscheibe nicht gegeben ist.

Die Zentrierscheibe darf auch nicht über den Außendurchmesser der Flansche hinausragen. Auch ist es für den Monteur bei diesen Einbaubedingungen nicht erkennbar, welche Richtung nun die Zentrierrichtung ist.

Es ist daher Aufgabe der Erfindung, die bekannte Zentriervorrichtung so zu verbessern, daß sie leicht und sicher auch bei geringem Abstand der Flansche zu handhaben ist.

Diese Aufgabe wird durch die Merkmale des Anspruchs 1 gelöst.

Es ist ein Hebel vorgesehen, der mit der Zentrierscheibe in Eingriff bringbar ist. Er ist relativ schmal ausgebildet, damit er auch bei geringem Abstand der Flansche einsetzbar ist. Wird der Hebel mit der Zentrierscheibe in Eingriff gebracht, so stützt er sich an zwei Stützstellen der Zentrierscheibe an dieser ab. Diese Stützstellen sind an der Zentrierscheibe so angeordnet, daß die Zentrierscheibe von dem Hebel nur in Zentrierrichtung bewegbar ist.

Der Monteur dreht mit Hilfe des Hebels die Zentrierscheibe so lange, bis ihre Flankenflächen zur Anlage mit den Flanschschrauben kommen. Wird dagegen der Hebel entgegen der Zentrierrichtung bewegt, so klinkt er sich aus der Zentrierscheibe aus. Der Monteur erkennt in diesem Fall sofort, daß die Flanken so nicht zur Anlage kommen können. Auf diese Weise ist sichergestellt, daß der Monteur für das Zentrieren den Hebel nur in der gewünschten Zentrierrichtung bewegen kann. Ist die Dichtung zentriert, so werden die Flanschschrauben angezogen.Anschließend wird der Hebel aus der Zentrierscheibe entfernt und steht für weitere Dichtungsmontagen wieder zur Verfügung.

Zweckmäßig wählt man als erste Stützstelle eine radial nach außen verlaufende Anlagefläche an der Zentrierscheibe. Der Hebel beaufschlagt diese Anlagefläche, wenn sich die Scheibe in Zentrierrichtung bewegen soll.

Es gibt verschieden Möglichkeiten, den Hebel mit der Zentrierscheibe in Eingriff zu bringen, von denen im folgenden einige angeführt werden sollen:

Man kann das eine Ende eines Sektors radial nach außen verlaufend gestalten und als Anlagefläche für den Hebel verwenden. Man wählt hierfür das Ende des Sektors, zu dem die spiralförmige Flanke sich mit zunehmendem Radius hinbewegt. Die zweite Stützstelle kann sich dann an der Begrenzung des daneben liegenden Sektors im radial innenliegenden Bereich befinden. Der Hebel ist in seinem unteren Bereich u-förmig ausgebildet und umfaßt das Ende des Sektors und damit zumindest teilweise auch die Anlagefläche für den Hebel, wobei dieser in dem u-förmigen Bereich nach vorne offen ist. Die rückwärtige Seite des Hebels am unteren Ende kommt mit der zweiten Stützstelle in Kontakt. Der Hebel kann in seinem unteren Bereich auch nur in radialer Richtung u-förmig sein und mit seinen beiden Schenkeln die Zentrierscheibe umgeben und so mit ihr in Eingriff kommen. Die zweite Stützstelle kann sich auch in dem Sektor, der die radial nach außen verlaufende Anlagefläche aufweist befinden und zwar im radial außenliegenden Bereich. In diesem Fall kann dieser Bereich einen Schlitz aufweisen, durch den ein am Hebel befestigter Stift hindurchtritt. Wichtig ist in beiden Fällen, daß die zweite Stützstelle den Hebel freigibt, wenn er sich entgegen der Zentrierrichtung bewegt.

Ein Sektor kann auch in seinem radial außenliegenden Bereich eine Nase aufweisen, die an ihren beiden Seiten die erste bzw. zweite Stützstelle hat. In diesem Fall haben die beiden Stützstellen radial nach außen verlaufende Anlageflächen, wobei allerdings die erste Stützstelle länger ist als die zweite und so die zweite Stützstelle den Hebel freigibt, wenn dieser sich entgegen der Zentrierrichtung bewegt.

Man kann auch eine Nase im radial außenliegenden Bereich eines Sektors verwenden, wobei die erste Stützstelle an der Nase liegt in Form einer radial nach außen verlaufenden Anlagefläche und die zweite Stützstelle neben der Nase. Der Hebel umgreift in diesem Fall u-förmig die Nase, wobei das U in Zentrierrichtung offen ist. Beim Ausklinken bewegt sich der Hebel von den Stützstellen weg.

Man kann entweder nur einen Ort an der Zentrierscheibe vorsehen, an dem der Hebel mit der Zentrierscheibe in Eingriff bringbar ist, oder man wählt an jedem Sektor einen solchen Ort. Im letzteren Fall ist die Handhabung vereinfacht, da die Zeit für das Suchen nach einer Eingriffstelle wesentlich reduziert wird.

Man kann den Hebel aber auch fest an der Zentrierscheibe befestigen. Bei dieser Variante fallen die beiden Stützstellen in einem Befestigungspunkt des Hebels an der Zentrierscheibe zusammen. Der Hebel weist eine Markierung auf(z. B. einen Pfeil), der die Zentrierrichtung angibt. Ist die Zentrierung erfolgt, werden die Flanschschrauben angezogen und dadurch die feste Flanschverbindung hergestellt. Im Befestigungsbereich des Hebels an der Zentrierscheibe ist eine Schwachstelle vorgesehen. Dadurch führt eine Bewegung des Hebels relativ zur festgehaltenen Zentrierscheibe zum Bruch an dieser Stelle und damit zum Lösen des Hebels (Ausklinken) von der Zentrierscheibe.

Sieht man eine Spannvorrichtung vor, so bedeutet dies eine wesentliche Hilfe bei der Montage. Die Spannvorrichtung wird mit ihrem einen Ende am äußeren Ende des Hebels befestigt und mit ihrem anderen Ende an einer der Schrauben. Bewegt die Spannvorrichtung den Hebel in Zentrierrichtung und kommen die Flankenflächen mit den Flanschschrauben zur Anlage, so ist die Zentriervorrichtung durch die Spannung festgehalten und der Monteur hat beide Hände frei, um die Flanschschrauben anzuziehen.

In den Figuren sind Beispiele der Erfindung dargestellt. Es zeigen:
- Fig. 1 :: ein erstes Ausführungsbeispiel der Erfindung, bei dem die Anlageflächen von den Enden zweier Sektoren gebildet sind.
- Fig. 2 :: ein zweites Ausführungsbeispiel, bei dem beide Stützstellen sich im Bereich eines Endes eines Sektors befinden.
- Fig. 3 :: ein drittes Ausführungsbeispiel, bei dem der Hebel eine Nase übergreift, die verschieden lange Stützstellen hat.
- Fig. 4:: ein viertes Ausführungsbeispiel mit einer Nase, wobei der Hebel u-förmig die Nase umgreift.

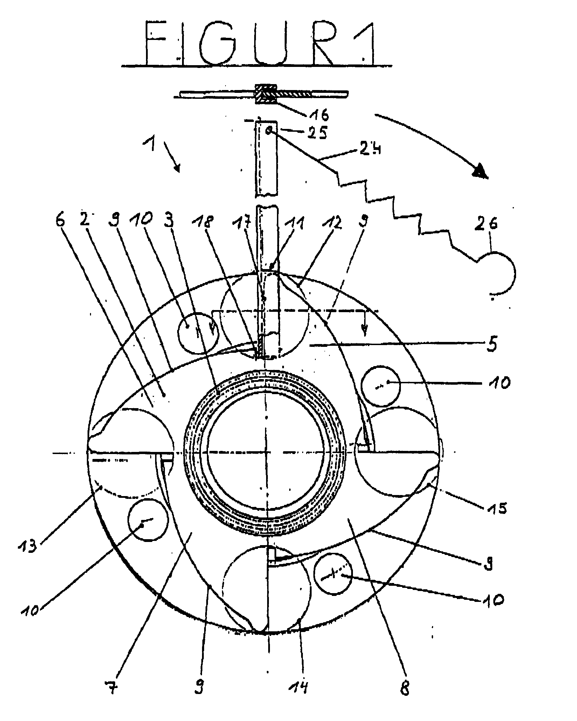

Bei dem Ausführungsbeispiel nach Fig. 1 weist die Zentriervorrichtung 1 eine flache Zentrierscheibe 2 auf, die am äußeren Rand seiner flachen Dichtung 3 befestigt ist. Die Figur zeigt vier Sektoren 5, 6, 7 und 8. Jeder Sektor hat eine spiralförmig nach außen verlaufende Flankenfläche 9 als Anlage für die Flanschschrauben 10. Der Hebel 11 ist in der Zentrierscheibe 2 an vier verschiedenen Stellen 12, 13, 14, und 15 in Eingriff bringbar. Der Hebel 11 ist relativ schmal ausgebildet und hat an seinem einen Ende eine Gabel 16, deren beide Zinken die Zentrierscheibe 2 beidseitig ein kurzes Stück umgeben. Der in Figur 1 rechts von dem Hebel liegende Sektor 5 zeigt an seiner linken Seite die erste Stützstelle, nämlich eine radial nach außen verlaufende Anlagefläche 17, die der Hebel 11 beaufschlagt, wenn er die Zentrierscheibe 2 in Zentrierrichtung (s.Pfeil) bewegt. Die zweite Stützstelle 18 befindet sich an der Begrenzung des links daneben liegenden Sektors 6 in dessen radial innen liegendem Bereich. Die zweite Stützstelle ist relativ kurz ausgebildet, so daß der Hebel sofort freigegeben ist, wenn er sich entgegen der Zentrierrichtung bewegt. Figur 1 zeigt ferner eine Spannvorrichtung 24, die mit ihrem einen Ende 25 am äußeren Ende des Hebels und mit ihrem anderen Ende 26 an einer der Flanschschrauben 10 befestigbar ist. Mit der Spannvorrichtung ist es möglich, den Hebel in Zentrierrichtung zu bewegen bis die Zentrierscheibe 2 mit den Flankenflächen zur Anlage an den Flanschschrauben kommt und durch die Spannung an den Flanschschrauben festgehalten wird.

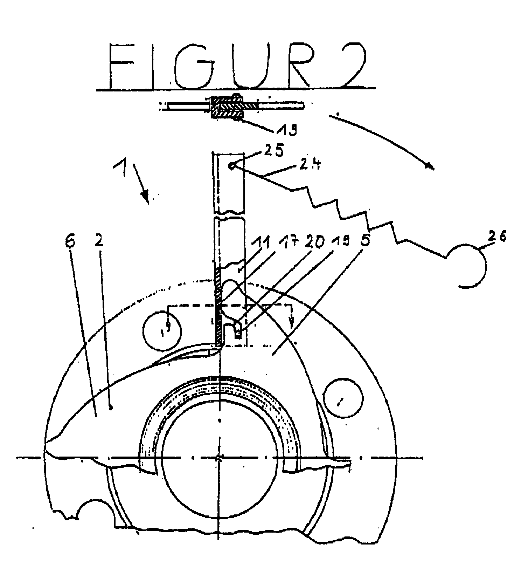

Figur 2 zeigt ein weiters Ausführungsbeispiel. Auch diese Zentriervorrichtung 1 hat eine Zentrierscheibe 2 mit vier Sektoren 5, 6, 7 und 8 und eine Hebel 11, der mit der Zentrierscheibe 2 in Eingriff bringbar ist. Auch hierbei ist die erste Stützstelle eine radial nach außen verlaufende Anlagefläche 17, die sich an dem Sektor 5 an dessen linker Seite befindet. Diese Anlagefläche 17 wird von dem Hebel beaufschlagt, wenn er die Zentrierscheibe 2 in Zentrierrichtung (s.Pfeil) dreht.

Die zweite Stützstelle befindet sich in diesem Endbereich des Sektors 5 in seinem Inneren. Senkrecht zur Flachseite des Hebels 11 ist an diesem ein Stift 19 befestigt, der durch seinen Schlitz 20 in der Zentrierscheibe hindurchtritt, so daß der Stift bei Bewegung des Hebels in Zentrierrichtung (s.Pfeil) an der zweiten Stützstelle in dem Schlitz zur Anlage kommen kann, aber der Hebel sich ausklinkt, wenn er sich entgegen der Zentrierrichtung bewegt.

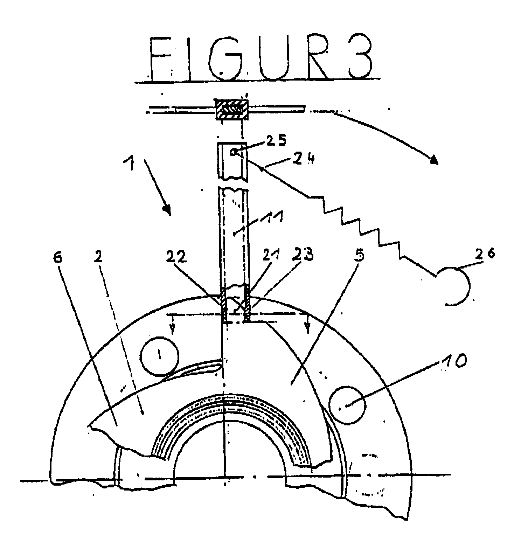

Fig. 3 zeigt im radial äußeren Bereich des Sektors 5 eine Nase 21, die an ihren beiden Seiten 22 und 23 die erste bzw. zweite Stützstelle hat. Beide Stützstellen verlaufen radial nach außen, wobei die erste Stützstelle länger ausgebildet ist als die zweite. Der Hebel 11 ist an seinem Ende rohrförmig mit rechteckigen Seiten ausgebildet und kann so über die Nase geschoben werden. Das Spiel ist so bemessen, daß bei der Bewegung des Hebels in Zentrierrichtung (s. Pfeil) der Hebel die Zentrierscheibe bis zur Anlage ihrer Flankenflächen an die Flanschschrauben bewegt und bei der Bewegung entgegen der zentrierrichtung der Hebel freigegeben wird.

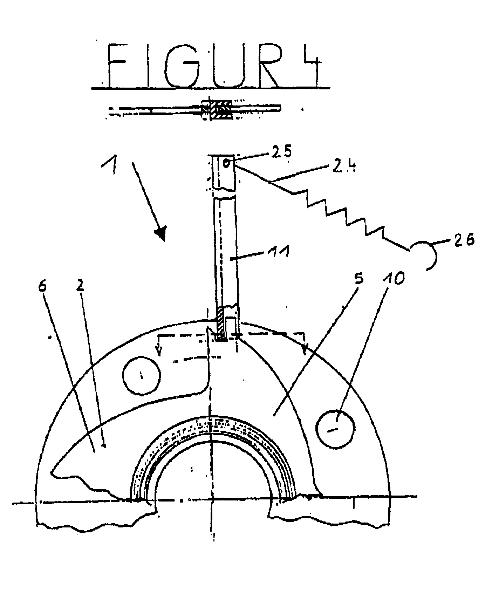

Die Ausführungsform nach Figur 4 entspricht in ihrer Funktion etwa der Funktion nach Figur 1, denn auch hierbei ist der Hebel an seinem unteren Ende u-förmig ausgebildet und kommt einerseits mit einer radial nach außen verlaufenden Anlagefläche an einer Nase und andererseits an seiner rückwärtigen Seite mit der zweiten Stützstelle an der Scheibe zur Anlage.

## Patentansprüche

1. Zentriervorrichtung für die Dichtung einer Flanschverbindung mit Flanschschrauben (10), wobei die Zentriervorrichtung besteht aus einer flachen Zentrierscheibe (2), die am äußeren Rand einer flachen Dichtung befestigt ist, wobei die Zentrierscheibe in gleiche Sektoren (5,6,7,8) unterteilt ist, und jeder Sektor eine spiralförmig nach außen verlaufende Flankenfläche (9) als Anlage für Flanschschrauben (10) zur Zentrierung aufweist und wobei durch Drehen der Zentrierscheibe die Flankenflächen an den Flanschschrauben zur Anlage kommen und so die Dichtung zentrierbar ist, dadurch gekennzeichnet, dass ein Hebel (11) vorgesehen ist, der relativ schmal ausgebildet ist, dass der Hebel mit der Zentrierscheibe (2) in Eingriff bringbar ist und sich dabei an zwei Stützstellen (17,18) der Zentrierscheibe an dieser abstützt, dass die Zentrierscheibe von dem Hebel nur in Zentrierrichtung bewegbar ist und dass sich der Hebel von der Zentrierscheibe ausklinkt, wenn er entgegen der Zentrierrichtung bewegt wird.

2. Zentriervorrichtung nach Anspruch 1, dadurch gekennzeichnet, dass die erste Stützstelle eine radial nach außen verlaufende Anlagefläche (17) ist, die der Hebel (11) beaufschlagt, wenn er die Zentrierscheibe (2) in Zentrierrichtung bewegt.

3. Zentriervorrichtung nach Anspruch 2, dadurch gekennzeichnet, dass die radial nach außen verlaufenden Anlagefläche (17) für den Hebel den Sektor an dessen einem Ende begrenzt und die zweite Stützstelle (18) sich an der Begrenzung des danebenliegenden Sektors (6) in dessen radial innenliegendem Bereich befindet.

4. Zentriervorrichtung nach mindestens einem der Ansprüche 2 oder 3, dadurch gekennzeichnet, dass die radial nach außen verlaufenden Anlagefläche (17) den Sektor (5) an dessen einem Ende begrenzt und die zweite Stützstelle (18) in diesem Bereich des Sektors sich befindet, wobei ein Stift (19) durch einen Schlitz (20) in der Zentrierscheibe (2) hindurchtritt.

5. Zentriervorrichtung nach mindestens einem der vorhergehenden Ansprüche, dadurch gekennzeichnet, dass mindestens ein Sektor (5) in seinem radial außenliegenden Bereich eine Nase (21) aufweist, die an ihren beiden Seiten die erste (17) und die zweite (18) Stützstelle aufweist, wobei die beiden Stützstellen radial nach außen verlaufen und wobei die erste Stützstelle länger ist als die zweite.

6. Zentriervorrichtung nach mindestens einem der vorhergehenden Ansprüche, dadurch gekennzeichnet, dass die beiden Stützstellen an jedem der Sektoren (5,6,7,8) vorgesehen sind.

7. Zentriervorrichtung nach mindestens einem der vorhergehenden Ansprüche, dadurch gekennzeichnet, dass die beiden Stützstellen in einem Befestigungspunkt des Hebels an der Zentrierscheibe zusammenfallen, in welchem der Hebel fest an der Zentrierscheibe befestigt ist, dass der Hebel eine Markierung aufweist, welche die Zentrierrichtung angibt und dass das Ausklinken dadurch erfolgt, dass der Hebel über eine Schwachstelle mit der Zentrierscheibe verbunden ist, so dass bei einer Relativbewegung des Hebels relativ zur Zentrierscheibe das Ausklinken des Hebels durch Bruch an der Schwachstelle erfolgt.

8. Zentriervorrichtung nach mindestens einem der vorhergehenden Ansprüche, dadurch gekennzeichnet, dass eine Spannvorrichtung (24) vorgesehen ist, die mit ihrem einen Ende (25) am äußeren Ende des Hebels und mit ihrem anderen Ende (26) an einer der Flanschschrauben (10) befestigbar ist und die den Hebel (11) in Zentrierrichtung bewegt, so dass die Zentrierscheibe (2) samt Dichtung (3) nach Anlage der Flankenflächen (9) an den Flanschschrauben festgehalten ist.

## Claims

1. A centering device for the gasket of a flange connection (10) comprising flange bolts, wherein the centering device consists of a flat centering disk (2) which is attached to the exterior edge of a flat gasket, the centering disk is subdivided into equal sectors (5, 6, 7, 8) and each sector has a centering flank face (9) extending helically outward and serving as a support for flange bolts (10) and wherein the flank faces are moved into abutment on the flange bolts by rotating the centering disk, the gasket thus being centerable, characterized in that a lever (11) is provided which is relatively narrow configured, said lever is engageable with the centering disk (2) and is then supported on the centering disk on two support sites (17, 18) thereof, the centering disk is movable by of the lever only in the direction of centering and the lever is disengaged from the centering disk when it is moved against the direction of centering.

2. The centering device according to claim 1, characterized in that the first support site is a support face (17) extending helically outward which is acted on by the lever (11) when said lever moves the centering disk (2) in the direction of centering.

3. The centering device according to claim 2, characterized in that the support face (17) for the lever extending radially outward confines the sector at one end thereof and the second support site (18) is located at the confinement of the adjacent sector (6) in the radially internal area thereof.

4. The centering device according to at least one of claims 2 or 3, characterized in that the support face (17) extending radially outward confines the sector (5) at one end thereof and the second support site (18) is located in this area of the sector, wherein a pin (19) is inserted into a slit (20) within the centering disk (2).

5. The centering device according to at least one of the preceding claims, characterized in that at least one sector (5) has a nose (21) in the radially external area thereof, said nose having said first (17) and said second (18) support sites at both sides thereof, wherein both support sites extend radially outward and the first support site is longer than the second one.

6. The centering device according to at least one of the preceding claims, characterized in that both of said support sites are provided at each of the sectors (5, 6, 7, 8).

7. The centering device according to at least one of the preceding claims, characterized in that both of said support sites coincide in one attachment point of the lever on the centering disk with the lever being rigidly attached to the centering disk at said attachment point, the lever has a mark indicating the direction of centering and the disengagement is effected by a relative motion of the lever relative to the centering disk, the lever being connected with the centering disk by a weak point such that the disengagement of the lever is effected by a breakage at the weak point.

8. The centering device according to at least one of the preceding claims, characterized in that a tensioning device (24) is provided which is attachable to the outer end of the lever with one end (25) thereof and to one of the flange bolts (10) with the other end thereof and which moves the lever (11) in the direction of centering such that the centering disk (2) along with the gasket (3) is retained after moving the flank faces (9) into abutment on the flange bolts.

## Revendications

1. Dispositif de centrage pour le joint d'étanchéité d'un assemblage à brides qui comprend des vis de brides (10), dans lequel le dispositif de centrage est composé d'un disque de centrage plat (2) qui est fixé au bord extérieur d'un joint d'étanchéité plat, le disque de centrage étant divisé en secteurs égaux (5, 6, 7, 8) et chaque secteur présentant une surface de flanc (9) qui s'étend en spirale vers l'extérieur pour servir de zone de contact avec les vis de brides (10) pour assurer le centrage, et dans lequel, sous l'effet de la rotation du disque de centrage, les surfaces de flanc viennent en contact avec les vis de brides et le joint d'étanchéité peut ainsi être centré, caractérisé en ce qu'il est prévu un levier (11) qui est de forme relativement étroite, en ce que le levier peut être mis en prise avec le disque de centrage (2) et prend alors appui sur le disque de centrage, dans deux zones d'appui (17, 18) du disque de centrage, en ce que le disque de centrage ne peut être entraîné par le levier que dans le sens du centrage et en ce que le levier se dégage du disque de centrage s'il est entraîné dans le sens inverse du centrage.

2. Dispositif de centrage selon la revendication 1, caractérisé en ce que la première zone d'appui est une surface de contact (17) s'étendant radialement vers l'extérieur, que le levier (11) sollicite lorsqu'il entraîne le disque de centrage (2) dans le sens du centrage.

3. Dispositif de centrage selon la revendication 2, caractérisé en ce que la surface (17) de contact du levier, qui s'étend radialement vers l'extérieur, limite le secteur à une de ses extrémités, et la deuxième zone d'appui (18) se trouve à la limite du secteur adjacent (6), dans la région radialement intérieure de ce secteur.

4. Dispositif de centrage selon au moins une des revendications 2 ou 3, caractérisé en ce que la surface de contact (17) qui s'étend radialement vers l'extérieur limite le secteur (5) à l'une de ses extrémités, et la deuxième zone d'appui (18) se trouve dans cette région du secteur, cependant qu'une goupille (19) traverse une fente (20) du disque de centrage (2).

5. Dispositif de centrage selon au moins une des revendications précédentes, caractérisé en ce qu'au moins un secteur (5) présente, dans sa région radialement extérieure, une dent (21) qui présente la première zone d'appui (17) et la deuxième zone d'appui (18) sur ses deux côtés, les deux zones d'appui s'étendant radialement vers l'extérieur, et la première zone d'appui étant plus longue que la deuxième.

6. Dispositif de centrage selon au moins une des revendications précédentes, caractérisé en ce que les deux zones d'appui sont prévues sur chacun des secteurs (5, 6, 7, 8).

7. Dispositif de centrage selon au moins une des revendications précédentes, caractérisé en ce que les deux zones d'appui se trouvent ensemble en un point de fixation du levier sur le disque de centrage où le levier est fixé rigidement au disque de centrage, en ce que le levier présente un marquage qui indique le sens du centrage et en ce que le dégagement se produit par le fait que le levier est relié au disque de centrage par l'intermédiaire d'une zone d'affaiblissement, de sorte qu'en réponse à un déplacement relatif par rapport au disque de centrage, le dégagement du levier se produit par une rupture au niveau de la zone d'affaiblissement.

8. Dispositif de centrage selon au moins une des revendications précédentes, caractérisé en ce qu'il est prévu un dispositif de serrage (24) qui peut être fixé à l'extrémité extérieure du levier par l'une (25) de ses extrémités et à une des vis de brides (10) par son autre extrémité (26), et qui entraîne le levier (11) dans le sens du centrage, de sorte que le disque de centrage (2), avec son joint d'étanchéité (3), est maintenu fermement après l'arrivée des surfaces de flancs (9) en contact avec les vis de brides.
